# EUROPÄISCHE PATENTANMELDUNG

(11) **EP 1 772 401 A1**
(43) Veröffentlichungstag der Anmeldung: **11.04.2007**
(21) Anmeldenummer: 06020808.9
(22) Anmeldetag: 04.10.2006
(51) Int. Cl.: B65G 13/10, B65G 47/54

(54) **Ausschleusvorrichtung**

(30) Priorität: 04.10.2005 DE 202005015544 U
(71) Anmelder: TRANSNORM SYSTEM GmbH, 31177 Harsum (DE)
(72) Erfinder: Warnecke, Karl, 31079 Sibbesse (DE)
(74) Vertreter: Siekmann, Gunnar

(57) **Zusammenfassung**

Eine Ausschleusvorrichtung für den Einsatz in einer Förderanlage, insbesondere einem Bandförderer oder einem Rollenförderer, mit mehreren um eine horizontale Achse (3) drehenden Rollen (2), die jeweils um eine vertikale Achse schwenkbar sind, zeichnet sich dadurch aus, daß die Rollen (2) ausgehend von einer Ausgangsposition zu beiden Seiten nach links und nach rechts schwenkbar sind.

## Beschreibung

Die Erfindung betrifft eine Ausschleusvorrichtung für den Einsatz in einer Förderanlage, insbesondere in einem Band- oder Rollenförderer, mit mehreren um eine horizontale Achse drehenden Rollen, die jeweils um eine vertikale Achse schwenkbar sind.

Eine derartige Ausschleusvorrichtung ist beispielsweise aus dem deutschen Gebrauchsmuster DE 202 16 094.7 bekannt. Ebenfalls ist eine solche Ausschleusvorrichtung in dem Gebrauchsmuster DE 202 16 093 U1 beschrieben. Die hier beschriebene Ausschteusvorrichtung weist Rollen mit einer horizontalen Drehachse auf, wobei die Rolle in einer Halterung angeordnet ist, die um eine vertikale Achse schwenkbar ist. Die Schwenkbarkeit wird durch ein Stellmittel erreicht, das als Schub- oder Zugstange ausgebildet ist und im unteren Haltebereich der Rolle festgeklemmt wird. Auf diese Weise lassen sich mehrere nebeneinander angeordnete Rollen in einem gewissen Umfang verschwenken, so daß die Rollen von einer Ausrichtung in Förderrichtung zu einer dazu schräg gestellten Ausrichtung gedreht werden können und dadurch eine Ausschleusung erfolgt.

Der Erfindung liegt die Aufgabe zugrunde, eine Ausschleusvorrichtung der eingangs genannten Art zu schaffen, die besonders flexible Einsatzmöglichkeiten bietet.

Die Lösung dieser Aufgabe erfolgt mit einer Ausschleusvorrichtung mit den Merkmalen des Schutzanspruches 1. Vorteilhafte Weiterbildungen der Erfindung sind in den Unteransprüchen angegeben.

Bei einer Ausschleusvorrichtung für den Einsatz in einer Förderanlage, insbesondere in einem Band- oder Rollenförderer, mit mehreren um eine horizontale Achse drehenden Rollen, die jeweils um eine vertikale Achse schwenkbar sind, ist es erfindungsgemäß vorgesehen, daß die Rollen, ausgehend von einer Ausgangsposition, sowohl nach links als auch nach rechts schwenkbar sind. Die Ausgangsposition ist dabei die Position, die einem Geradeauslauf bzw. einem Nichtablenken der in der Förderanlage geförderten Güter entspricht. Durch ein Verdrehen nach links oder rechts kann ein Ausschleusen nach links oder rechts aus der Förderanlage erreicht werden. Der Schwenkwinkel nach links und rechts beträgt bevorzugt mindestens 45°, in einer bevorzugten Ausgestaltung jeweils mindestens 67°, bevorzugt sogar mindestens 80° und in einer besonders bevorzugten Ausführungsform sind die Rollen zu beiden Seiten der Ausgangsposition um bis zu 90° nach links und bis zu 90° nach rechts schwenkbar, so daß eine maximale seitliche Ablenkung erreicht wird.

Bevorzugt ist jede Rolle innerhalb der Ausschleusvorrichtung als einzelnes und insbesondere modular austauschbares Element ausgebildet. Die sich um eine horizontale Achse drehenden Rollen weisen eine Schwenkachse auf, die sich vertikal erstreckt und deren Mittelpunkt sich auf der vertikalen Schwenkachse befindet. Am unteren Endpunkt dieser vertikalen Schwenkachse ist ein Kegelrad angeordnet. Die Verschwenkung erfolgt bevorzugt über Kegelradgetriebe. Dadurch ist grundsätzlich eine uneingeschränkte mehrfache Drehung jeder einzelnen Rolle möglich. Auch Drehungen um 180° oder 360° sind grundsätzlich durch diese Getriebeart möglich. Bevorzugt weist die Ausschleusvorrichtung für mehrere Kegelräder, die jeweils mit einem Kegelrad zusammenwirken, das auf der vertikalen Schwenkachse einer Rolle angeordnet ist, eine gemeinsame Welle auf. Dadurch können mehrere nebeneinander angeordnete Rollen durch die Drehbewegung einer Welle und der darauf angeordneten Kegelräder, die mit den Kegelrädern der Rollen kooperieren, gleichmäßig und simultan bewegt, so daß sämtliche oberhalb dieser Welle angeordneten Rollen in die gleiche Richtung und um den gleichen Winkel geschwenkt werden.

Die Reihe der Rollen ist bevorzugt quer zur Förderrichtung der Förderanlage ausgerichtet. In einer anderen bevorzugten Ausgestaltung der Erfindung sind mehrere Reihen von Rollen parallel zueinander ausgerichtet und entsprechend sind auch mehrere Wellen zur Aufnahme von Kegelrädern parallel zueinander angeordnet. Bevorzugt sind sämtliche dieser Wellen quer zur Förderrichtung angeordnet. In manchen Ausgestaltungen kann auch die Anordnung längs zur Förderrichtung sinnvoll sein.

Bevorzugt sind die mehreren Wellen zur Aufnahme der Kegelräder miteinander verbunden, insbesondere mechanisch miteinander verbunden. Auf diese Weise wird eine gleichzeitige Bewegung der Wellen und damit auch eine gleichzeitige und simultane Verschwenkung der Rollen und auch der mehreren Reihen von Rollen gewährleistet.

In einer anderen bevorzugten Ausgestaltung ist eine zusätzliche Antriebseinrichtung vorgesehen, die einen umlaufenden Zahnriemen antreibt. Dieser umlaufende Zahnriemen treibt am unterem Ende jeder Rolle angeordnete Zahnräder an, so daß über diesen Zahnriemenantrieb sämtliche Rollen synchron verschwenkbar sind. Bei Bewegung dieser unteren Zahnräder wird die gesamte Halterung mitgedreht, so daß die Drehachse der Rolle verschwenkt wird. Der Zahnriemen wird bevorzugt von einem Antrieb mit einem Malteserkreuzantrieb angetrieben, so daß hier ein Elektromotor einsetzbar ist. Der Elektromotor treibt eine Scheibe mit zwei Mitnehmern an, die in ein entsprechendes Getriebe eingreifen. Auf diese Weise sind fünf Stellungen, nämlich 0°, +/- 45° und +/- 90° erreichbar.

In einer anderen bevorzugten Ausgestaltung der Erfindung weisen die Rollen eine einseitige Achshalterung auf. Das heißt, daß jede Rolle nur an einer Seite eine Achsaufhängung aufweist und dadurch auch eine Asymmetrie gegeben ist. In einer bevorzugten Weiterentwicklung der Erfindung sind nebeneinander angeordnete Rollen spiegelbildlich zueinander angeordnet. Das heißt, daß jeweils zwei Achsaufhängungen bzw. zwei achsaufhängungsfreie Seiten zueinander benachbart sind. In einer anderen bevorzugten Ausgestaltung der Erfindung werden die Rollen durch einen in einer horizontalen Ebene umlaufenden Riemen angetrieben. Bevorzugt werden alle Rollen durch einen einzigen Riemen angetrieben. Der Antrieb durch den Riemen erfolgt in der horizontalen Ebene und treibt zunächst ein vertikal ausgerichtetes Element an. Dieses überträgt die Drehbewegung auf die horizontal ausgerichtete Rolle. Bevorzugt erfolgt dies durch einen außermittig berührenden Antrieb, so wie er auch in der DE 202 16 093 U1 und der DE 202 16 094 U1 beschrieben ist. Auch andere Arten der Übertragung, wie beispielsweise Kegelradgetriebe, sind möglich. Ein Antrieb der Rollen ist bei einer Ausführungsform mit zwei Reihen von Rollen besonders günstig. Der Riemen ist bevorzugt in jeder Reihe der Rollen abwechselnd auf der Außenseite und der Innenseite der den Rollen zugeordneten Antriebsbereiche geführt. Auf diese Weise ist eine große Umschlingung der einzelnen Antriebsbereiche und damit ein zuverlässiger Antrieb gegeben.

In einer anderen bevorzugten Ausgestaltung zum Antrieb der Rollen selbst, wird ein Vertikalriemen verwendet, der mindestens ein oder zwei Rollen direkt antreibt. Dazu wird ein Zahnrad angetrieben, das die Antriebswelle der Rolle über einen Winkeltrieb beaufschlagt und dadurch die Rolle selbst antreibt. Beabstandet zu dem Vertikalriemen angeordnete Rollen werden durch einen umlaufenden Zahnriemen angetrieben, der die verschiedenen Rollen miteinander verbindet. In einer weiteren bevorzugten Ausgestaltung der Erfindung erfolgt der Antrieb der Rollen gemeinsam über eine Zentral-Antriebswelle. Durch eine derartige Zentral-Antriebswelle in Verbindung mit Übertriebswellen und Übertriebsrollen, können die Rollen miteinander gekoppelt werden und gemeinsam angetrieben werden.

Ein weiterer Aspekt der Erfindung betrifft eine Rolle zur Verwendung in einer oben beschriebenen Ausschleusvorrichtung, wobei die Rolle eine horizontal drehende Achse aufweist und in einer um eine vertikale Achse drehbaren Halterung angeordnet ist, die an ihrem unteren Ende ein Kegelrad aufweist. Die um die vertikale Achse drehbare Halterung weist bevorzugt einen Antriebsbereich auf, über den die Halterung oder zumindest ein Teil der Halterung um die vertikale Achse drehbar ist, so daß darüber ein Antrieb der vertikal gehaltenen Rolle erfolgen kann. Bevorzugt erfolgt dies dadurch, daß die um die vertikale Achse drehbare Halterung mit einem äußeren Bereich reibend an der Rolle anliegt. Auf diese Weise ist eine Übertragung der Drehbewegung der vertikalen Halterung auf die Rolle möglich. Auch andere alternative Antriebe, wie beispielsweise Kegelradantriebe oder Zahnriemenantriebe, sind möglich. Ein weiterer Aspekt der Erfindung betrifft eine Förderanlage, insbesondere einen Bandförderer oder einen Rollenförderer, die die erfindungsgemäße Ausschleusvorrichtung aufweist.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: ist die erfindungsgemäße Ausschleusvorrichtung in einer perspektivischen Gesamtansicht dargestellt, wobei der umlaufende antreibende Riemen zur besseren Ansicht daneben dargestellt ist;
- Fig. 2:: eine Seitenansicht der erfindungsgemäßen Vorrichtung gemäß Figur 1;
- Fig. 3:: eine Stirnansicht der erfindungsgemäßen Vorrichtung gemäß Figur 1;
- Fig. 4:: eine Draufsicht auf einen Teilbereich einer Förderanlage mit einer erfindungsgemäßen Ausschleusvorrichtung;
- Fig. 5:: eine alternative Ausführungsform einer erfindungsgemäßen Ausschleusvorrichtung in einer perspektivischen Gesamtansicht;
- Fig. 6:: eine dritte Ausführungsform einer erfindungsgemäßen Ausschleusvorrichtung in einer perspektivischen Gesamtansicht;
- Fig. 7:: eine Unteransicht der Ausschleusvorrichtung gemäß Figur 6.

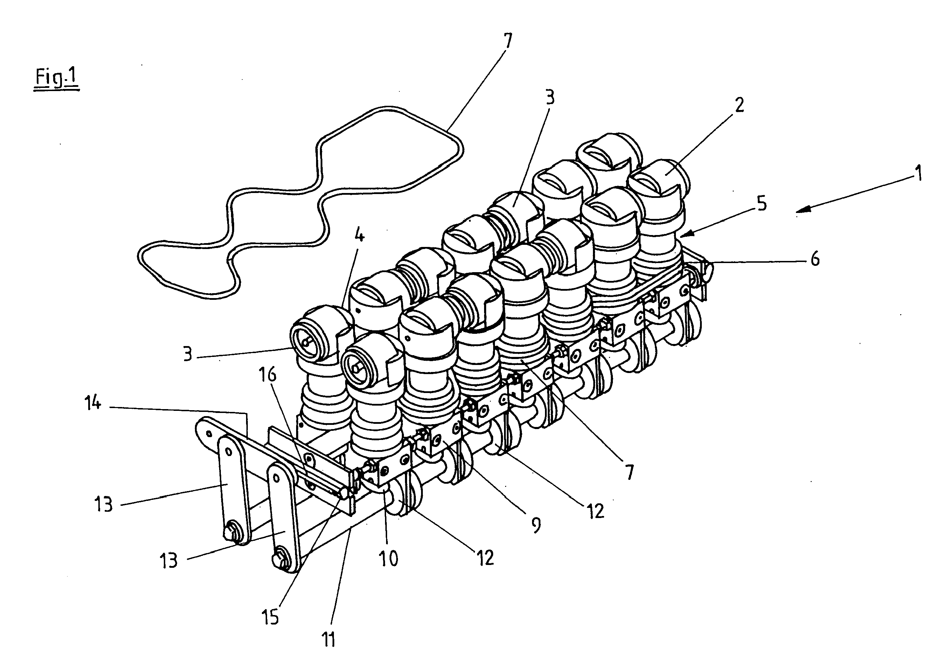

In Figur 1 ist die erfindungsgemäße Ausschleusvorrichtung 1 in einer perspektivischen Ansicht dargestellt. An diese Ausschleusvorrichtung 1 schließt sich zu beiden Längsseiten die Förderanlage an, so daß das zu fördernde Gut quer über die dargestellte Ausschleusvorrichtung, d.h., in Laufrichtung der in zwei Reihen angeordneten vierzehn Rollen 2, gefördert wird. Jede Rolle 2 weist eine horizontale Achse 3 auf, um die die Rolle 2 drehbar gehalten ist. Die Achsen 3 sind an einer einseitigen Achshalterung 4 montiert. Die Achshalterung 4 ist an einer Schwenkachse 5 befestigt, die drehbar auf einem Sockelelement 9 angeordnet ist. Im unteren Bereich der Schwenkachse 5 ist eine Antriebswelle 6 vorgesehen, in der ein umlaufender Riemen 7 läuft. Die Rollen 2 werden per Winkeltrieb von der Antriebswelle 6 angetrieben. Die Achshalterung 4 ist insgesamt um eine vertikale Achse schwenkbar. Am unteren Ende der vertikalen Achse ist ein Kegelrad 10 angeordnet. Unterhalb jeder Rolle 2 ist daher ein Kegelrad 10 angeordnet, das jeweils mit einem zugehörigen, im 90° Winkel dazu angeordnetem Kegelrad 12 kämmt. Mehrere Kegelräder 12 sind jeweils auf einer Welle 11 angeordnet, so daß bei Drehung der Welle 11 insgesamt sieben Kegelräder 12 gedreht werden, die in die Kegelräder der jeweils zugehörigen Rollen 2 eingreifen und damit eine simultane Verschwenkung der zugehörigen Rollen 2 bewirken. Die in Figur 1 dargestellte Ausschleusvorrichtung 1 weist zwei parallele Reihen von Rollen 2 auf. Jeder dieser Reihen ist eine Welle 11 mit darauf angeordneten Kegelrädern 12 zugeordnet. Die Kegelräder 10 und 12 haben eine Übersetzungsverhältnis 1:1,5, so daß eine Verschwenkung des Hebel 13 von 60° eine Verschwenkung der Achshalter 4 von 90° bewirkt. Die Wellen 11 haben jeweils einen vertikal angebrachten Hebel 13, wobei die Hebel über eine Schubstange 14 miteinander verbunden sind. Durch Bewegung der Schubstange 14 zur Seite werden beide Hebel 13 gleichmäßig bewegt und verdrehen dadurch die Wellen 11 simultan, so daß entsprechend alle Rollen 2 simultan verdreht werden. Der Antrieb der Rollen 2 selbst, nämlich die Drehung um die horizontale Achse 3, erfolgt über den umlaufenden Riemen 7, der an den Antriebswellen 6 der Schwenkachse 5 umläuft. Der Verlauf des Riemens 7 ist separat dargestellt. Dieser ist in Form einer sich abwechselnd erweiternden und zusammenziehenden Schleife ausgeführt, so daß der Riemen 7 einmal auf der Außenseite einer Antriebswelle 6 geführt ist und bei der nächsten Rolle auf der Innenseite der Antriebswelle 6 geführt ist, so daß die Antriebswelle 6 möglichst weitgehend von dem Riemen 7 umschlungen sind.

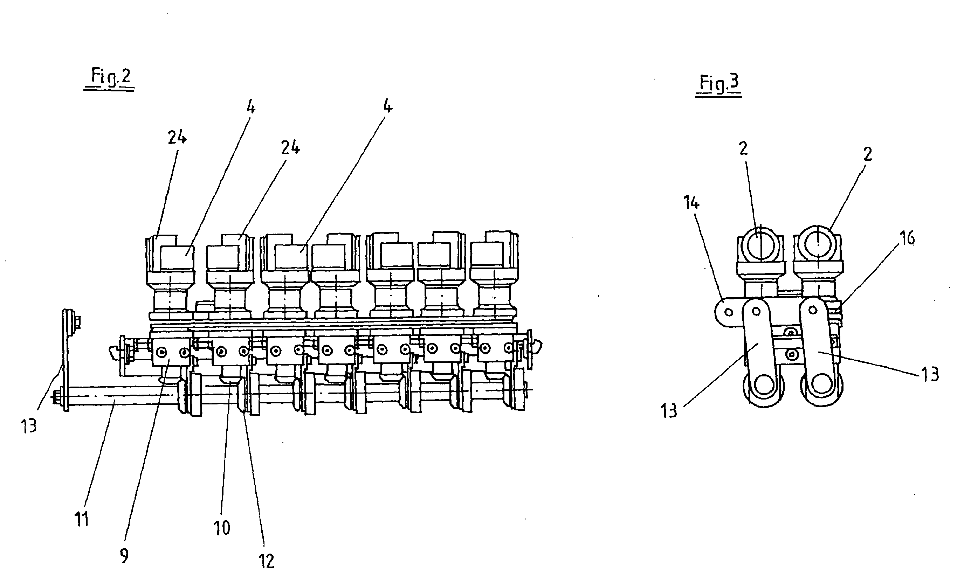

In Figur 2 ist die erfindungsgemäße Ausschleusvorrichtung gemäß Figur 1 in einer Seitenansicht dargestellt. Gleiche Teile sind mit gleichen Bezugszeichen gekennzeichnet.

In Figur 3 ist eine Stirnansicht der erfindungsgemäßen Vorrichtung dargestellt, bei der insbesondere die Hebel 13 und die Schubstange 14 zu erkennen sind.

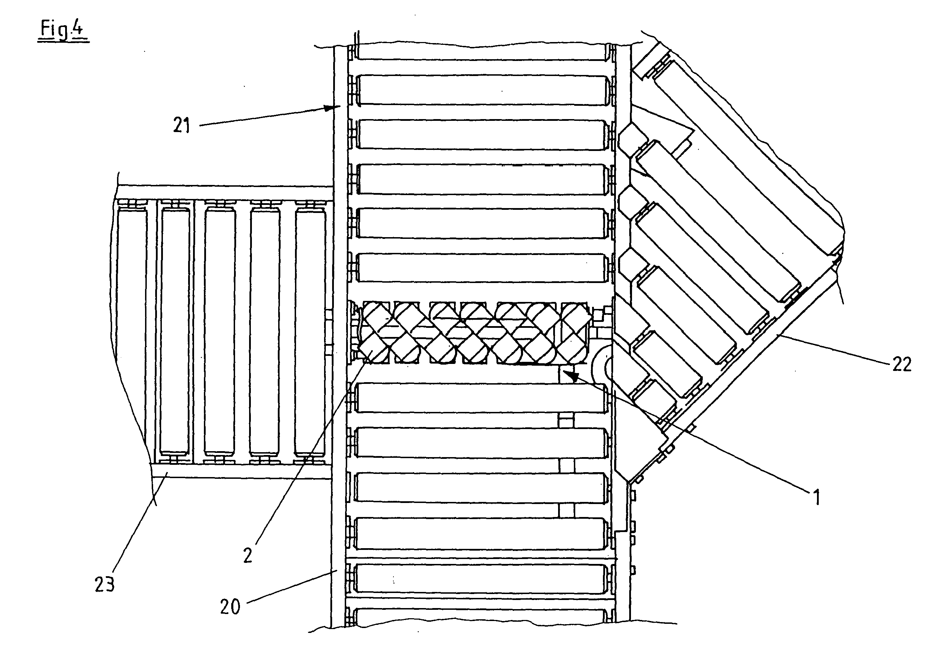

In Figur 4 ist eine Draufsicht auf eine Förderanlage mit einer erfindungsgemäßen Ausschleusvorrichtung 1 dargestellt. In Laufrichtung vor der Ausschleusvorrichtung 1 ist ein Zuführbereich 20 mit mehreren Rollen dargestellt. Im Geradeauslauf über die Ausschleusvorrichtung 1 hinweg werden die zu fördernden Güter von dem Transportbereich 21 mit einer Mehrzahl von Rollen abgeführt. In der in Figur 4 dargestellten Situation sind die Rollen 2 der Ausschleusvorrichtung 1 unter einem Winkel von etwa 45° nach rechts ausgerichtet. Die zu fördernden Güter werden vom Zuführbereich 20 über die Ausschleusvorrichtung 1 auf den Bereich 22 mit seinen Förderrollen geleitet. Der Bereich 22 ist unter einem Winkel von 45° an der Hauptförderstrecke mit dem Zuführbereich 20 und dem Transportbereich 21 angesetzt. Alternativ können die Rollen 2 der Ausschleusvorrichtung 1 im gezeigten Beispiel auch um 90° nach links ausgerichtet sein, so daß die zu fördernden Güter vom Zuführbereich 20 über die Ausschleusvorrichtung 1 nach links auf den Förderbereich 23 gefördert werden.

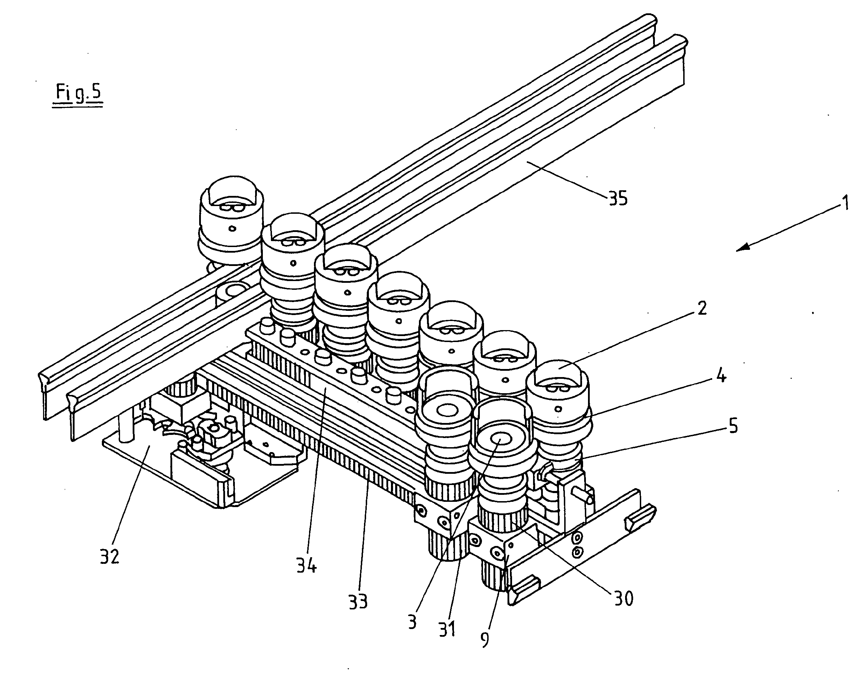

In Figur 5 ist eine alternative Ausführungsform einer erfindungsgemäßen Ausschleusvorrichtung in einer perspektivischen Gesamtansicht dargestellt. Die Ausschleusvorrichtung 1 stimmt in Funktion und Anordnung mit der vorher beschriebenen Ausschleusvorrichtung überein und ist in einer Förderanlage entsprechend Fig. 4 angeordnet. Die Rollen 2, die auf Achsen 3 in einer einseitigen Achshalterung 4 befestigt sind, werden durch den Vertikalriemen 35 angetrieben. Der Vertikalriemen 35 berührt eine Antriebswelle der unmittelbar benachbarten Schwenkrolleneinheit und treibt die Welle tangential an. Die Antriebswelle dieser Schwenkrolleneinheit treibt zum einen über einen Winkeltrieb die darauf angeordnete Rolle 2 und zum anderen einen tangential eingreifenden Zahnriemen 34 an. Dieser umlaufende Zahnriemen 34 treibt nun alle in der Ausschleusvorrichtung angeordneten Rollen an. Dies erfolgt über die mit den jeweiligen Antriebswellen verbundenen Zahnräder 30. Zum Schwenken der gesamten Schwenkachse 5 mit der Achshalterung 4 und der Rollen 2 ist am unterem Endbereich, noch unterhalb des festen Sockelelements 9 ein Zahnrad 31 angeordnet. Dieses wird über einen Zahnriemen 33 bewegt, der seinerseits von einem separaten Antrieb 32 angetrieben wird. Dadurch kann ein beliebiges Verschwenken erfolgen. Der Antrieb 32 ist bevorzugt als Malteserkreuz ausgebildet. Ein Motor treibt eine Scheibe mit zwei nach oben gerichteten Mitnehmern an, die im rechten Bereich des Antriebs 32 zu erkennen ist. Diese greift in ein Getriebe ein. Dadurch sind fünf Stellungen erreichbar, nämlich 0°, +/- 45° und +/- 90°. Diese Ausführungsform ermöglicht eine sehr variable Anordnung der Schwenkrollen. Die Anordnung und Teilung der Schwenkrollen können innerhalb der Schwenkrolleneinheit einfach verändert werden.

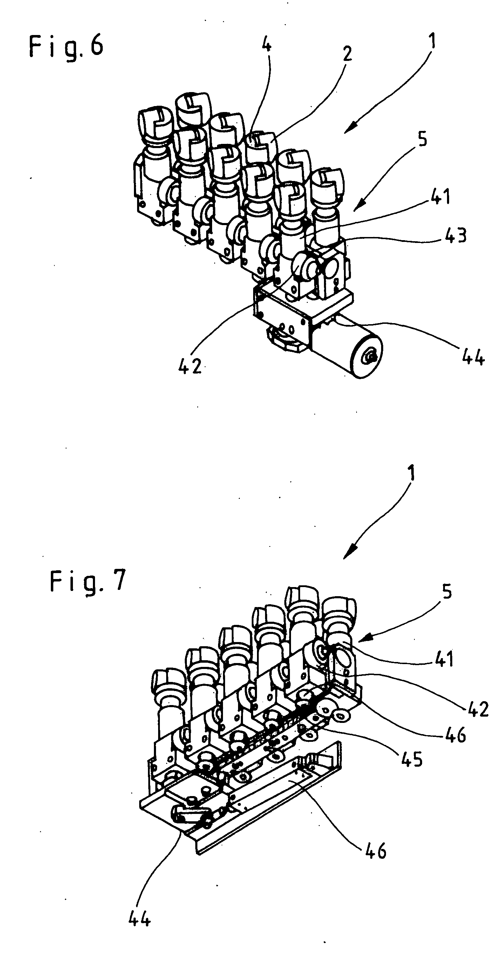

Figur 6 ist eine dritte Ausführungsform einer erfindungsgemäßen Ausschleusvorrichtung in einer perspektivischen Gesamtansicht dargestellt. Die Ausschleusvorrichtung 1 stimmt in Funktion und Anordnung mit der vorher beschriebenen Ausschleusvorrichtung überein und ist in einer Förderanlage entsprechend Figur 4 angeordnet. Die in zwei Reihen angeordneten Rollen 2 weisen auch hier einseitige Achshalterungen 4 auf. Im Unterschied zur Ausführungsform gemäß Figur 1 erfolgt der Antrieb der Vielzahl der Rollen jedoch nicht um einen umlaufenden Riemen 7. Hier ist im unteren Bereich der Schwenkachse 5 eine Riemenscheibe und Übertriebswelle 41 angeordnet. Es werden jedoch beispielsweise nur die beiden in der Zeichnung vorderen Rollen 2 beziehungsweise deren zugehörigen Riemenscheiben und Übertriebswellen 41 durch einen umlaufenden Riemen angetrieben. Durch den Antrieb dieser Übertriebswelle 41 wird einerseits die zugeordnete Rolle 2 angetrieben, es wird aber auch durch seitliche reibschlüssige Berührung die Übertriebsrolle 42 angetrieben, die ihrerseits eine Zentral-Antriebswelle 43 antreibt und die Zentral-Antriebswelle 43 die übrigen Übertriebsrollen 42 antreibt, die dann wiederum die übrigen Riemenscheiben Übertriebswellen 41 antreiben. Auf die Weise wird durch den Antrieb einer einzigen oder von zwei benachbarten Riemenscheiben und Übertriebswellen 41 die gesamte Ausschleusvorrichtung mit ihren zehn Rollen 2 angetrieben. Der Schwenkantrieb 44 erfolgt hier, so wie auch bereits im Zusammenhang mit der zweiten Ausführungsform gemäß Figur 5 beschrieben, mit einem Malteserkreuz-Getriebe.

In Figur 7 ist die Ausschleusvorrichtung gemäß Figur 6 in einer perspektivischen Ansicht von unten dargestellt, wobei insbesondere auch das Malteserkreuz-Getriebe dargestellt ist. Weiterhin erfolgt hier der Schwenkantrieb über eine Rollenkette 45, die die zugeordneten Zahnräder 46 antreibt, über die die Rollen 2 verschwenkt werden. Der Schwenkantrieb erfolgt über einen Pneumatikzylinder 46.

## Patentansprüche

1. Ausschleusvorrichtung für den Einsatz in einer Förderanlage, insbesondere einem Bandförderer oder einem Rollenförderer, mit mehreren, um eine horizontale Achse (3) drehenden Rollen (2), die jeweils um eine vertikale Achse schwenkbar sind,
**dadurch gekennzeichnet,**
**daß** die Rollen (2) ausgehend von einer Ausgangsposition zu beiden Seiten nach links und nach rechts schwenkbar sind.

2. Ausschleusvorrichtung nach Anspruch 1, **dadurch gekennzeichnet, daß** die Rollen (2), ausgehend von einer Ausgangsposition, um mindestens 45° nach links und 45° nach rechts schwenkbar sind.

3. Ausschleusvorrichtung nach einem der Ansprüche 1 oder 2, **dadurch gekennzeichnet, daß** die Rollen (2), ausgehend von einer Ausgangsposition, um bis zu 90° nach links und bis zu 90° nach rechts schwenkbar sind.

4. Ausschleusvorrichtung nach einem der vorhergehenden Ansprüche, **dadurch gekennzeichnet, daß** die Rollen (2) am Ende der vertikalen Schwenkachse ein Zahnrad, insbesondere ein Kegelrad (10) aufweisen.

5. Ausschleusvorrichtung nach einem der vorhergehenden Ansprüche, **dadurch gekennzeichnet, daß** die Rollen (2) über Kegelradgetriebe (10, 12) schwenkbar sind.

6. Ausschleusvorrichtung nach einem der vorhergehenden Ansprüche, **dadurch gekennzeichnet, daß** die Ausschleusvorrichtung für mehrere Kegelräder (12), die jeweils mit einem Kegelrad (10) im Verhältnis 1:1,5 zusammenwirken, wobei die Kegelräder (10) jeweils auf der vertikalen Schwenkachse einer Rolle (2) angeordnet sind, eine gemeinsame Welle (11) aufweist.

7. Ausschleusvorrichtung nach einem der vorhergehenden Ansprüche, **dadurch gekennzeichnet, daß** mehrere Wellen (11) zur Aufnahme von Kegelrädern (12) parallel zueinander angeordnet sind.

8. Ausschleusvorrichtung nach Anspruch 7, **dadurch gekennzeichnet, daß** die Wellen (11) zur gleichzeitigen Drehung miteinander verbunden sind.

9. Ausschleusvorrichtung nach einem der Ansprüche 1 bis 4, **dadurch gekennzeichnet, daß** die Rollen (2) über einen Zahnriemen (33) schwenkbar sind.

10. Ausschleusvorrichtung nach Anspruch 9, **dadurch gekennzeichnet, daß** ein Schwenkantrieb (32) als Malteserkreuz ausgebildet ist.

11. Ausschleusvorrichtung nach einem der vorhergehenden Ansprüche, **dadurch gekennzeichnet, daß** die Rollen (2) eine einseitige Achshalterung (4) aufweisen.

12. Ausschleusvorrichtung nach einem der vorhergehenden Ansprüche, **dadurch gekennzeichnet, daß** in einer Reihe (11) angeordnete Rollen (2) jeweils spiegelbildlich zueinander positioniert sind.

13. Ausschleusvorrichtung nach einem der vorhergehenden Ansprüche, **dadurch gekennzeichnet, daß** die Rollen (2) durch einen in einer horizontalen Ebene umlaufenden Riemen (7) angetrieben sind.

14. Ausschleusvorrichtung nach Anspruch 13, **dadurch gekennzeichnet, daß** der Riemen (7) bei in einer Reihe angeordneten Rollen (2) abwechselnd auf der Außenseite und der Innenseite eines den Rollen (2) zugeordneten Antriebsbereiches (6) geführt ist.

15. Ausschleusvorrichtung nach der einem der Ansprüche 1 bis 13, **dadurch gekennzeichnet, daß** die Rollen (2) über einen Vertikalriemen (35) angetrieben sind.

16. Ausschleusvorrichtung nach Anspruch 15, **dadurch gekennzeichnet, daß** nicht unmittelbar vom Vertikalriemen (35) angetriebenen Rollen über einen umlaufenden Zahnriemen (34) angetrieben sind.

17. Ausschleusvorrichtung nach einem der vorhergehenden Ansprüche, **dadurch gekennzeichnet, daß** die Rollen 2 zum Antrieb über eine Zentral-Antriebswelle 43 miteinander verbunden sind.

18. Rolle zur Verwendung in einer Ausschleusvorrichtung nach einem der vorhergehenden Ansprüche, wobei die Rolle um eine horizontale Achse (3) drehbar ist und um eine vertikale Achse schwenkbar ist,
**dadurch gekennzeichnet,**
**daß** die Rolle (2) im unteren Endbereich der vertikalen Schwenkachse ein Zahnrad oder Kettenrad, aufweist.

19. Förderanlage, insbesondere Bandförderer oder Rollenförderer, **dadurch gekennzeichnet, daß** die Förderanlage eine Ausschleusvorrichtung gemäß einem der Ansprüche 1 bis 17 aufweist.
